# EUROPÄISCHE PATENTSCHRIFT

(11) **EP 1 846 193 B1**
(45) Veröffentlichungstag und Bekanntmachung des Hinweises auf die Patenterteilung: **02.04.2008**
(21) Anmeldenummer: 05803503.1
(22) Anmeldetag: 16.11.2005
(51) Int. Cl.: B23Q 11/00, B23Q 11/10, B23Q 11/12, B23Q 11/14

(54) **KÜHLVORRICHTUNG**
COOLING DEVICE
DISPOSITIF DE REFROIDISSEMENT

(30) Priorität: 02.02.2005 DE 102005004673
(43) Veröffentlichungstag der Anmeldung: 24.10.2007
(73) Patentinhaber: Hydac System GmbH, 66280 Sulzbach/Saar (DE)
(72) Erfinder: KUNZ, Rudolf, 66482 Zweibrücken (DE); KLEIN, Winfried, 66798 Wallerfangen (DE)
(74) Vertreter: Bartels & Partner
(86) Internationale Anmeldenummer: PCT/EP2005/012278
(87) Internationale Veröffentlichungsnummer: WO 2006/081854

(56) Entgegenhaltungen:
- DE-A1- 3 338 482
- PATENT ABSTRACTS OF JAPAN Bd. 013, Nr. 469 (M-883), 24. Oktober 1989 (1989-10-24) & JP 01 183335 A (NISSEI PLASTICS IND CO; others: 02), 21. Juli 1989 (1989-07-21)

## Beschreibung

Die Erfindung betrifft eine Kühlvorrichtung für eine Arbeitsmaschine zur Kühlung eines erwärmten Fluids, wie Kühlschmiermittel, mit mindestens einem Kühlaggregat, das mittels einer Pumpeinrichtung mit mindestens einer Hydropumpe von einer Filtereinrichtung filtriertes Fluid erhält, das aus mindestens einem Vorratstank stammt, mit einer Unterteilung in einen Reintank und einen Schmutztank, wobei das Kühlaggregat im Umlauf gekühltes Fluid in den Reintank zurückbringt.

Bei einer bekannten gattungsgemäßen Kühlvorrichtung, wie sie in der Praxis bereits Verwendung findet, wird an einer Arbeitsmaschine, wie beispielsweise einer Schleifmaschine, in die Umgebung austretendes Fluid in Form von Kühlschmiermittel in einer Maschinenbettwanne als Sammelstation gesammelt und mittels einer Hydropumpe in einen Schmutztank als Teil eines Kühlschmiermittel-Vorratstanks gefördert. Das derart in den Schmutztank verbrachte verschmutzte und gegebenenfalls erwärmte Fluid wird mittels einer weiteren Hydropumpe einer Filtereinrichtung zugeführt, wobei das derart abfiltrierte Fluid und mithin nach Durchlaufen der Filtereinrichtung über einen Nebenzweig teilweise in einen Reintank des Vorratstanks verbracht wird, und in einem Hauptzweig gelangt ein Teil des filtrierten Fluids zu einem Kühlaggregat, das im Umlauf das filtrierte und gekühlte Fluid in den Reintank zurück verbringt. Von dort aus kann abgereinigtes und gekühltes Fluid in Form des Kühlschmiermittels über eine weitere Hydropumpe im Vorlauf der Arbeitsmaschine an deren zu kühlende Teile, wie Antriebe, transportiert werden, wobei dann nach Durchlaufen der Antriebe das erwärmte Kühlschmiermittel im Rücklauf in den Reintank unmittelbar zurückkehrt.

Bei der bekannten Lösung befindet sich im Zulauf oder im Hauptzweig zum Kühlaggregat ein Kugelhahn zur Einregulierung der Mengenaufteilung nach der genannten Filtereinrichtung. Dergestalt soll erreicht werden, dass bei der konstanten Kühlleistung des Kühlaggregates dieses immer die gleiche Durchflußmenge an zu kühlendem Fluid vom Schmutztank aus erhält, um nach Möglichkeit konstante Temperaturverhältnisse im Reintank zu schaffen, von wo aus über den Vorlauf die Versorgung der zu kühlenden Antriebe der Schleifmaschine erfolgt. Da dahingehende Schleifmaschinen sehr exakt zu arbeiten haben und eine Schleif-Werkstückbearbeitung im Genauigkeitsbereich von Mikrometern zu gewährleisten haben, können bereits kleinste Temperaturabweichungen im Kühlkreislauf (Vorlauf und Rücklauf) für die zu versorgenden Antriebe der Arbeitsmaschine deutliche und nicht gewünschte Bearbeitungsungenauigkeiten mit sich bringen.

Erhöht sich nun bei der bekannten Lösung der Gegendruck in der Filtereinrichtung aufgrund von aufgefangenen Verschmutzungen (Schleifstaub, Partikelabrieb etc.) im Kühlschmiermittel durch das jeweils eingesetzte Filtermaterial, so reduziert sich dergestalt die Durchflußmenge, die man an sich, wie dargelegt, konstant halten möchte. Diese Veränderung der Durchflußmenge führt bei der gewünschten konstanten Kühlleistung des Kühlaggregates zu Veränderungen der Temperaturen im Reintank, was sich dann nachteilig auf die Bearbeitungsgenauigkeit der Schleifmaschine als Arbeitsmaschine auswirkt. Auch wenn es zu einer Durchmischung im Reintank mit dem dort bereits befindlichen gekühlten Fluid kommt, sind die sich hieraus ergebenden Temperaturänderungen noch derart einschlägig, dass die Bearbeitungsungenauigkeiten zu beobachten sind. Auch wird aufgrund der veränderten Durchmischung im Reintank bedingt durch die geänderten Temperaturen auf der Abgabeseite des Kühlaggregates die Temperaturregelung für die Arbeitsmaschine nachteilig beeinflußt.

Ausgehend von diesem Stand der Technik liegt der Erfindung die Aufgabe zugrunde, die bekannte Lösung unter Beibehalten ihrer Vorteile dahingehend weiter zu verbessern, dass für eine Arbeitsmaschine, wie eine Schleifmaschine, eine Fluidversorgung, insbesondere mit Kühlschmiermittel, konstanter Temperatur sichergestellt ist, die eine hochgenaue Bearbeitung mit der Arbeitsmaschine ermöglicht. Eine dahingehende Aufgabe löst eine Kühlvorrichtung mit den Merkmalen des Patentanspruches 1 in seiner Gesamtheit.

Dadurch, dass gemäß dem kennzeichnenden Teil des Patentanspruches 1 die Hydropumpe der Pumpeinrichtung ausschließlich mit der Filtereinrichtung gefiltertes Fluid vom Schmutztank in den Reintank fördert und dass eine weitere eigenständige Hydropumpe das in den Reintank eingebrachte Fluid an das Kühlaggregat für den Umlauf weiterfördert, kann der Grundaufbau der bekannten Kühlvorrichtung erhalten bleiben. Durch die erfindungsgemäße Aufteilung der Funktionen, zum einen Filtrieren aus dem Schmutztank in den Reintank und zum anderen Transport des Fluids vom Reintank zum Kühlaggregat und zurück in den Reintank, ist sichergestellt, dass etwaige Druckverluste, bedingt durch das Zusetzen des Filters der Filtereinrichtung, sich diese nicht mehr nachteilig auf die konstant zu haltenden Durchflußmengen für das Kühlaggregat auswirken können, mit der Folge, dass insgesamt die Temperaturen auf der Reintankseite weitgehend konstant bleiben, was sich wiederum günstig auf die Bearbeitungsgenauigkeit für die Arbeitsmaschine auswirkt, deren zu versorgende Teile, wie Antriebe, Fluid konstanter Temperatur erhalten sollten, damit die mit der Maschinensteuerung zusammenwirkende Temperaturregelung eine gleichmäßige, exakte Bearbeitungsgenauigkeit sicherstellen kann.

Die erfindungsgemäße Lösung ist kostengünstig in der Herstellung und funktionssicher in der Anwendung. Es ist für einen Durchschnittsfachmann auf dem Gebiet von Kühlvorrichtungen überraschend, dass er mit nur wenigen Maßnahmen und unter Einsatz bereits vorhandener Komponenten eine wesentlich verbesserte Bearbeitungsgenauigkeit für eine Arbeitsmaschine erhält, sofern er im skizzierten Rahmen die Funktionen Filtrieren und Kühlen bezogen auf den Schmutztank und den Reintank separiert. Die erfindungsgemäße Kühlvorrichtung braucht nicht auf die Verwendung von Kühlschmiermittelkühlung bei Schleifmaschinen eingeschränkt zu sein; sondern kann überall dort, auch in Hydraulikkreisläufen, bei Arbeitsmaschinen eingesetzt werden, wo zur Erzielung hoher Stellgenauigkeiten von Antrieben od. dgl. eine konstante Temperatur des Versorgungsfluids gewünscht ist.

Als besonders vorteilhaft hat es sich erwiesen, die Entnahmen für das Kühlaggregat im sog. warmen Bereich des Reintanks vorzunehmen, d.h. in der Nähe des Rücklaufs des Fluids von den einzelnen Fluidverbrauchern der Arbeitsmaschine.

Bei einer weiteren bevorzugten Ausführungsform der erfindungsgemäßen Kühlvorrichtung ist vorgesehen, dass mittels mindestens einer weiteren Hydropumpe Fluid aus dem Reintank zu einer Reinigungs- oder Spüleinrichtung der Arbeitsmaschine transportierbar ist. Dergestalt läßt sich beispielsweise die Schleifscheibe der Arbeitsmaschine abreinigen, was auch unter Hochdruck erfolgen kann. Vorzugsweise ist dabei ferner vorgesehen, dass ein in den Vorlauf eingesetzter Strömungswächter die dahingehende Hydropumpe für die Reinigungs- oder Spüleinrichtung ansteuert und diese insbesondere abschaltet, wenn der Vorlauf fluidfrei ist. Dadurch, dass man nun die Hydropumpe für die Reinigungs- und Spüleinrichtung abschaltet, wenn die Arbeitsmaschine nicht in Betrieb ist, kann die ansonsten von der permanent angetriebenen Hydropumpe umgesetzte Wärmeenergie beim Öffnen der Reinigungs- oder Spüldüsen für die Schleifscheibe über das Fluid nicht mehr zum Werkstück gelangen, was insoweit die Bearbeitungsgenauigkeit mit erhöhen hilft.

Weitere vorteilhafte Ausführungsformen der erfindungsgemäßen Kühlvorrichtung sind Gegenstand der sonstigen Unteransprüche.

Im folgenden wird die erfindungsgemäße Kühlvorrichtung anhand eines Ausführungsbeispiels nach der Zeichnung näher erläutert. Dabei zeigen in prinzipieller und nicht maßstäblicher Darstellung in der Art von hydraulischen Schaltplänen die
- Fig.1: eine Lösung nach dem Stand der Technik und die
- Fig.2: eine der Fig.1 entsprechende Darstellung unter Einbezug der erfindungsgemäßen Kühlvorrichtung.

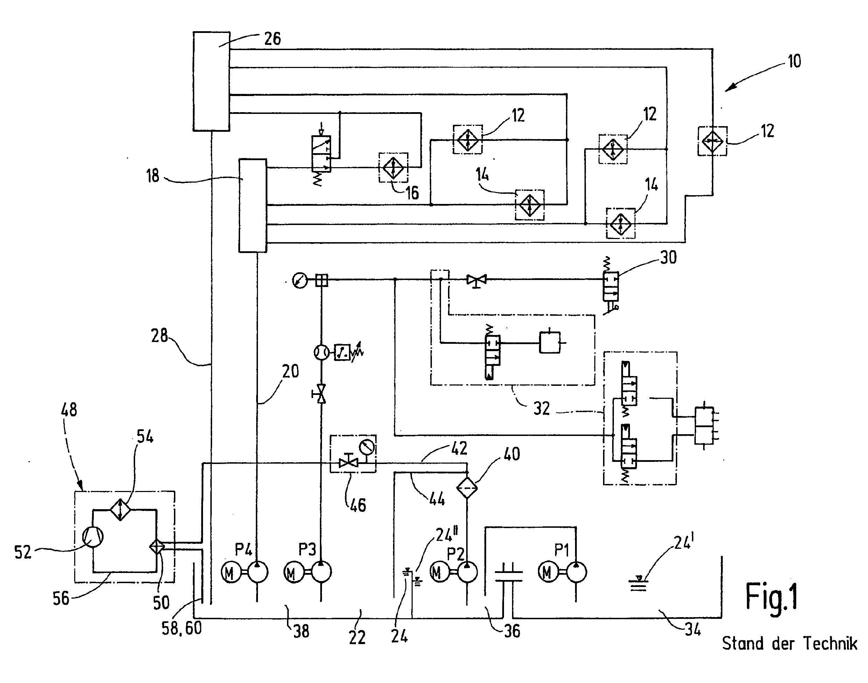

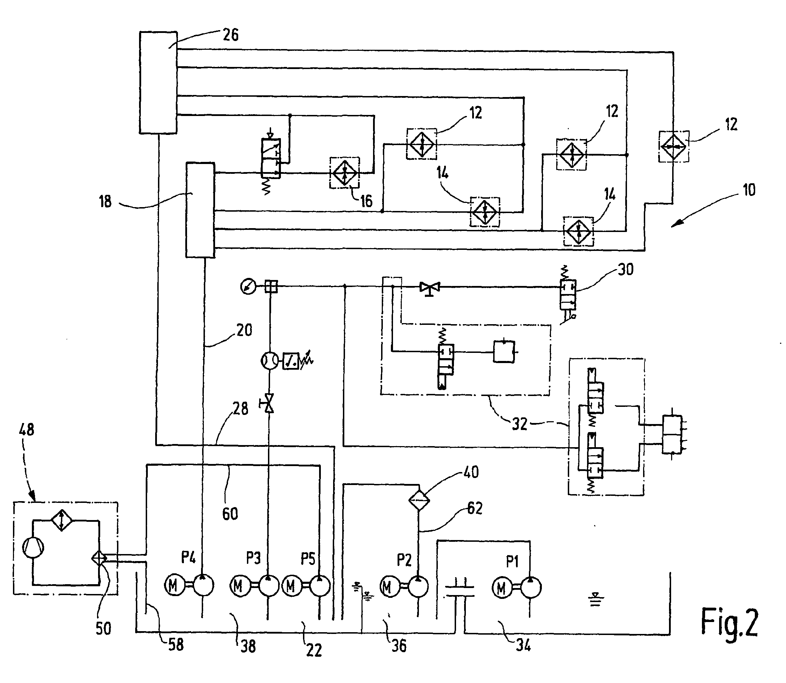

Bevor die erfindungsgemäße Kühlvorrichtung anhand der Fig.2 näher erläutert werden wird, soll zunächst der bekannte Aufbau nach der Fig.1 näher erläutert werden.

Die Fig.1 zeigt eine bekannte Kühlvorrichtung für eine als Ganzes mit 10 bezeichnete Arbeitsmaschine in Form einer Schleifmaschine. Die Schleifmaschine 10 weist drei Linearmotoren 12 auf sowie zwei Achsmotoren 14 und einen Schleifspindelmotor 16 zum Antrieb einer nicht näher dargestellten Schleifscheibe. Die sonstigen angesprochenen Motoren 12 und 14 erlauben einen fünfachsigen Schleifbetrieb, mit dem sich auch Turbinenschaufeln od. dgl. hochgenau einschleifen lassen. Über einen Verteiler 18 werden die genannten Motoren 12,14 und 16 über einen Vorlauf 20 in Form einer Fluidleitung mittels einer Hydropumpe P4 aus einem Reintank 22 mit einem Fluid in Form eines Kühlschmiermittels versorgt. Das mögliche Niveau des Kühlschmiermittels im Reintank 22 ist mit einer Niveaustandsanzeige 24 symbolhaft wiedergegeben. Das mittels der Hydropumpe P4 über den Vorlauf 20 zum Verteiler 18 zugeführte Kühlschmiermittel wird zur Kühlung der Motoren 12,14 und 16 entsprechend diesen über Fluidleitungen zugeführt und das erwärmte Kühlschmiermittel wird wiederum an Fluidleitungen abgegeben und einer Sammelstelle 26 zugeführt, die das dann im Betrieb der Arbeitsmaschine erwärmte Fluid über eine Fluidleitung in Form des Rücklaufs 28 an den Reintank 22 zurückgibt. Derart ist ein in sich geschlossener Kühlschmiermittelkreislauf für die Motoren der Arbeitsmaschine 10 realisiert. Die jeweils eingesetzten Niveaustandsanzeigen können auch mit zur Ansteuerung des Fluidniveaus in den zugehörigen Behältern (Tanks) eingesetzt werden.

Über eine weitere Hydropumpe P3 kann vom Reintank 22 Kühlschmiermittel einer nicht näher dargestellten Spülpistole zugeführt werden, die an ein ansteuerbares 2/2-Wege-Ventil 30 anschließbar ist. Über die dahingehende Spülpistole als Teil einer Reinigungs- und Spüleinrichtung läßt sich die im Betrieb befindliche Schleifscheibe zum einen kühlen und zum anderen abreinigen. Optional kann auch eine Hochdruck-Reinigungseinrichtung 32 vorgesehen sein, die einen Druckübersetzer aufweist, um die genannte Schleifscheibe mit Hochdruck abreinigen zu können. Die einzelnen Reinigungsdüsen werden dann über Magnetventile abgesperrt bzw. mit dem Kühlschmiermittel versorgt.

Wie die Fig.1 des weiteren zeigt, wird im Bereich der Arbeitsmaschine 10 in die Umgebung austretendes Fluid in Form des Kühlschmiermittels, das insbesondere bei der Versorgung der Schleifscheibe von außen her auftritt, in einer Sammelstation 34 gesammelt, die bei der Arbeitsmaschine 10 eine Art Maschinenbettwanne darstellen kann, wobei das Fluidniveau in der Sammelstation 34 symbolhaft mit einer Niveaustandsanzeige 24' wiedergegeben ist. Eine Hydropumpe P1 transportiert das dahingehend verschmutzte und gegebenenfalls erwärmte Fluid in einen Schmutztank 36, wobei ein nicht näher dargestellter Überlauf vom Schmutztank 36 zur Maschinenbettwanne als Sammelstation 34 sicherstellt, dass der Schmutztank 36 nicht ungewollt überfüllt wird. Das mögliche Füllstandsniveau im Schmutztank 36 ist beispielhaft mit dem Niveaustandsanzeigesymbol 24" wiedergegeben. Sowohl Reintank 22 als auch Schmutztank 36 sind gemeinsamer Bestandteil eines Vorratstanks 38; es wäre hier aber auch denkbar, räumlich voneinander getrennt Reintank 22 und Schmutztank 36 an der Arbeitsmaschine 10 anzuordnen. Auch könnten mehrere Tankeinheiten (nicht dargestellt) die jeweiligen Einzeltanks bilden. Ferner werden alle Hydropumpen von üblichen Elektromotoren M angetrieben, die im Betrieb Wärme abgeben.

Der von dem Reintank 22 über eine Trennwand separierte Schmutztank 36 weist eine weitere Hydropumpe P2 auf, die das verschmutzte Fluid aus dem Schmutztank 36 einer Filtereinrichtung 40 zuführt. Nach der Filtereinrichtung 40 teilt sich die zugehörige Fluidleitung in einen Hauptzweig 42 und einen Nebenzweig 44 auf. Die Angabe Hauptzweig und Nebenzweig ist willkürlich gewählt und muß nicht zwingend mit der jeweiligen Hauptdurchflußmenge nach der Filtereinrichtung 40 an Fluid zusammenhängen. In den Hauptzweig 42 ist ein einstellbarer Kugelhahn 46 mit Manometerüberwachung geschaltet. Der Hauptzweig 42 mündet eingangsseitig in ein als Ganzes mit 48 bezeichnetes Kühlaggregat, wohingegen der Nebenzweig 44 in den Reintank 22 mündet. Das Kühlaggregat 48 weist eingangsseitig einen Wärmetauscher 50 auf, der beispielsweise als Plattenwärmetauscher ausgebildet als Verdampfer wirkt. Das Kühlaggregat 48 weist des weiteren einen Kompressor 52 sowie einen Verflüssiger 54 auf. Das Kühlaggregat 48 ist also als Kompressor-Kühlaggregat ausgebildet und besteht insoweit aus einem geschlossenen Kältekreislauf 56 mit hermetischem Verdichter oder Kompressor 52. In den Kältekreislauf ist ein übliches Kältemittel eingebracht. Des weiteren schließt sich an den Verdampfer oder Wärmetauscher 50 neben dem Hauptzweig 42 eine Ablaufleitung 58 an, die in den Reintank 22 mündet und Bestandteil eines insoweit offenen Kühlkreislaufs 60 ist.

Um eine gewünschte Solltemperatur mittels des Kühlaggregates 48 sicherstellen zu können, das eine nahezu konstante Kühlleistung aufweist, wird mittels des Kugelhahns 46 über den Hauptzweig 42 eine vorgebbare Durchflußmenge nach der Filtereinrichtung 40 abgegriffen und dem Kühlaggregat 48 mit seinem Wärmetauscher 50 zugeführt. Die Kühlleistung des Kühlaggregates wird in gewissen Grenzen durch ein Expansionsventil geregelt, und zwar abhängig von der Kühlleistung, die über den Kühlkreis 60 am Verdampfer 50 anliegt. Durch die Betriebsweise der Maschine ist die erforderliche Kühlleistung, über einen kürzeren Zeitraum betrachtet, dann nahezu konstant. Eine eventuell vorhandene überschüssige Teilmenge nach der Filtereinrichtung 40 wird im Nebenzweig 44 direkt in den Reintank 22 als Überschußmenge eingebracht. Mit zunehmender Verschmutzung der Filtereinrichtung 40 baut sich aber ein Gegendruck auf und die gewünschte, konstant zu haltende Durchflußmenge an Kühlschmiermittel im Hauptzweig 42 reduziert sich. Die dahingehende Veränderung der Durchflußmenge führt bei der genannten konstanten Kühlleistung zu einer Veränderung der Temperaturen im Rücklauf in den Reintank 22 über die Ablaufleitung 58. Dies führt gleichzeitig zu einer veränderten Durchmischung von gekühltem Fluid, eingebracht über die Ablaufleitung 58, und von verbliebenem Fluid im Reintank 22.

Die veränderte Durchmischung beeinflußt dann aber wieder nachteilig die Temperaturregelung und es ist nicht möglich, Kühlschmiermittel mit konstant vorgegebener Temperatur (Soll-Temperatur) über den Vorlauf 20 der Arbeitsmaschine 10 mit ihren zu kühlenden Teilen zuzuführen. Da insoweit sich insbesondere an den Motoren 12,14 und 16 eine geänderte Temperatursituation einstellt, die von Soll-Vorgaben abweicht, ist insoweit eine hochgenaue Bearbeitung mit der Arbeitsmaschine 10, insbesondere mit deren Schleifscheibe, nicht möglich. Dies wird noch weiter dadurch unterstützt, dass über die Hydropumpe P3, sei es mit Normaldruck, sei es mit Hochdruck, Kühlschmiermittel mit geänderter Temperatur über eine Reinigungs- oder Spüleinrichtung der Schleifscheibe (nicht dargestellt) und mithin dem Werkstück zugeführt wird. Des weiteren erfolgt die Anpassung des aktuellen Kühlleistungsbedarfs der Gesamtarbeitsmaschine 10 durch Ein- oder Abschaltung des Kompressor-Kühlaggregates 48. Ein Einschalten erfolgt beim Erreichen der oberen Grenze einer Soll-Temperatur und das Abschalten beim Erreichen der unteren Grenze der Soll-Temperatur. Aufgrund der ungewollten Temperaturänderungen im Reintank 22 kommt es dann zu einer Schalt-Hysterese, die gleichfalls eine Temperaturschwankung im Vorlauf 20 der zu kühlenden Maschinenteile der Arbeitsmaschine 10 bewirkt, was sich wiederum nachteilig auf die Genauigkeit bei der Bearbeitung auswirkt.

Zur Vermeidung der vorstehend genannten Nachteile bei einer bekannten Kühlvorrichtung für eine an sich bekannte Arbeitsmaschine 10 in Form einer Schleifmaschine, setzt nunmehr die erfindungsgemäße Lösung mit einer geänderten Kühlvorrichtung ein, wie sie sich näher aus der Darstellung nach der Fig.2 ergibt. Was die Darstellung der Arbeitsmaschine 10 anbelangt, ist diese gleich aufgebaut wie die bekannte Lösung und ebenso das Kompressor-Kühlaggregat 48. Ferner ist der Reintank 22 erhalten geblieben, ebenso der Schmutztank 36 und die Sammelstation 34 in Form einer Maschinenbettwanne. Des weiteren versorgt nach wie vor eine Hydropumpe P4 die zu kühlenden Komponenten der Arbeitsmaschine und mittels einer Hydropumpe P1 gelangt verschmutztes Fluid in Form von Kühlschmiermittel von der Sammelstation 34 in den Schmutztank 36. Ebenso versorgt die Hydropumpe P3, wie bereits dargelegt, die Reinigungs- und Spüleinrichtung für die Schleifscheibe der Arbeitsmaschine 10. Insoweit wird Bezug genommen auf die bereits getroffenen Ausführungen für die bekannte Lösung nach der Fig.1.

Die erfindungsgemäße Kühlvorrichtung weist nunmehr einen eigenständigen Filterkreislauf 62 auf, bei dem mittels der Hydropumpe P2 verschmutztes und gegebenenfalls erwärmtes Fluid von der Filtereinrichtung 40 gereinigt auf die Reinseite mit dem Reintank 22 gelangt. Von dort aus wird dann mittels einer eigenständigen weiteren Hydropumpe P5 nunmehr im geschlossenen Kühlkreislauf 60 an den Verdampfer oder Wärmetauscher 50 des Kühlaggregates 48 das Fluid weitergeleitet und das derart gekühlte Fluid (Kühlschmiermittel) gelangt dann über die Ablaufleitung 58 zurück in den Reintank 22 für einen erneuten Umlauf mittels der Hydropumpe P5. Dergestalt ist eine sehr homogene Temperaturverteilung innerhalb des Reintanks 22 auf konstantem Niveau bezogen auf die vorgegebene Soll-Temperatur erreichbar. Vorzugsweise erfolgt die Entnahme des Fluids über die Hydropumpe P5 in einem warmen Bereich des Reintanks 22, der von der Ablaufleitung 58 mit dem gekühlten Kühlschmiermittel abgewandt ist und in der Nähe den Eingang des Rücklaufs 28 aufweist, über das das erwärmte Kühlschmiermittel in den Reintank 22 von der Arbeitsmaschine 10 kommend zurückgeführt wird. Derart ist über den Reintank 22 insoweit ein interner geschlossener Kühlkreislauf 60 erhalten, auch wenn der Reintank 22 zur Umgebung hin offen ausgestaltet sein kann.

Durch die Entkopplung von Filterkreislauf 62 zu Kühlkreislauf 60 sind in jedem Fall die Druckverluste im Kühlkreislauf 60 konstant gehalten, was wiederum dazu führt, dass die Durchflußmengen und somit die Temperatur konstant gehalten werden können. Eine spezielle Reglerfunktion des Kältekreislaufs 56 im Kompressor-Kühlaggregat (Dauerlauf mit Bypassregelung) ermöglicht zusätzlich eine Verbesserung der Konstanz der Vorlauftemperatur, d.h. es ist eine Hysterese von 1 K, also ± 0,5 K im Vorlauf 20 zu den zu versorgenden Teilen der Arbeitsmaschine 10 erreicht. Mit der erfindungsgemäßen Kühlvorrichtung ist mithin eine Konstanthaltung der Temperatur des Fluids im Reintank 22 möglich und somit eine Versorgung der Arbeitsmaschine 10 mit Fluid einer vorgebbaren Soll-Temperatur, die sich durch den Zulauf an Fluid aus dem Filterkreis 62 nicht ändert, was zu einer hochgenauen Bearbeitung mit der Arbeitsmaschine 10 führt. Die erfindungsgemäße Kühlvorrichtung braucht nicht auf die Anwendung von Kühlschmiermittel eingeschränkt zu sein, sondern kann überall dort angewendet werden, wo bei Arbeitsmaschinen Fluide, auch Hydraulikmedien, möglichst konstante Temperaturen aufweisen sollen und die über eine Filtereinrichtung 40 vom Partikelschmutz befreit sind. Sofern in der Anmeldung auf Hydropumpen Bezug genommen ist, ist deren Anwendung nicht auf Ölhydraulik eingeschränkt, sondern als Fluid- oder Medienpumpen konzipiert können sie auch andere Fluide, wie Kühlschmiermittel od. dgl., transportieren.

## Patentansprüche

1. Kühlvorrichtung für eine Arbeitsmaschine (10) zur Kühlung eines erwärmten Fluids, wie Kühlschmiermittel, mit mindestens einem Kühlaggregat (48), das mittels einer Pumpeinrichtung mit mindestens einer Hydropumpe (P2) von einer Filtereinrichtung (40) filtriertes Fluid erhält, das aus mindestens einem Vorratstank (38) stammt, mit einer Unterteilung in einen Reintank (22) und einen Schmutztank (36), wobei das Kühlaggregat (48) im Umlauf gekühltes Fluid in den Reintank (22) zurückbringt, **dadurch gekennzeichnet, dass** die Hydropumpe (P2) der Pumpeinrichtung ausschließlich mit der Filtereinrichtung (40) gefiltertes Fluid vom Schmutztank (36) in den Reintank (22) fördert und dass eine weitere eigenständige Hydropumpe (P5) das in den Reintank (22) eingebrachte Fluid an das Kühlaggregat (48) für den Umlauf weiterfördert.

2. Kühlvorrichtung nach Anspruch 1, **dadurch gekennzeichnet, dass** das Kühlaggregat (48) ein Kompressor-Kühlaggregat ist mit einem Wärmetauscher (50), einer Kompressoreinrichtung (52) und einer Verdampfereinrichtung.

3. Kühlvorrichtung nach Anspruch 2, **dadurch gekennzeichnet, dass** die Verdampfereinrichtung aus dem Wärmetauscher (50) gebildet ist.

4. Kühlvorrichtung nach einem der Ansprüche 1 bis 3, **dadurch gekennzeichnet, dass** die Arbeitsmaschine (10) mit dem Fluid zu versorgende Teile aufweist, wie Antriebe (12,14,16), die mittels mindestens einer weiteren dritten Hydropumpe (P4) in einen Vorlauf (20) aus dem jeweiligen Reintank (22) versorgt sind und die über einen Rücklauf (28) das an sie verteilte Fluid in den Reintank (22) erwärmt zurückführen.

5. Kühlvorrichtung nach einem der Ansprüche 1 bis 4, **dadurch gekennzeichnet, dass** mittels mindestens einer weiteren vierten Hydropumpe (P3) Fluid aus dem Reintank (22) zu einer Reinigungs- oder Spüleinrichtung (30,32) der Arbeitsmaschine (10) transportierbar ist.

6. Kühlvorrichtung nach einem der Ansprüche 1 bis 5, **dadurch gekennzeichnet, dass** an der Arbeitsmaschine (10) in die Umgebung austretendes Fluid in einer Sammelstation (34) gesammelt und mittels mindestens einer weiteren fünften Hydropumpe (P1) in den jeweiligen Schmutztank (36) abtransportierbar ist.

7. Kühlvorrichtung nach Anspruch 5 oder 6, **dadurch gekennzeichnet, dass** ein in den Vorlauf (20) eingesetzter Strömungswächter die jeweilige vierte Hydropumpe (P3) ansteuert und diese insbesondere abschaltet, wenn der Vorlauf (20) fluidfrei ist.

8. Kühlvorrichtung nach einem der Ansprüche 1 bis 7, **dadurch gekennzeichnet, dass** die Anpassung des aktuellen Kühlleistungsbedarfs der Gesamt-Arbeitsmaschine (10) mittels einer Steuereinrichtung erfolgt, die das Kühlaggregat (48) beim Erreichen einer oberen oder unteren Grenze einer vorgebbaren Soll-Temperatur einschaltet bzw. abschaltet.

9. Kühlvorrichtung nach einem der Ansprüche 4 bis 8, **dadurch gekennzeichnet, dass** die Entnahme des Fluids für das Kühlaggregat (48) in einem warmen Bereich des Reintanks (22) erfolgt, der in der Nähe der Einmündungsstelle des Rücklaufs (28) in den Reintank (22) liegt und der erwärmtes Fluid von den zu versorgenden Teilen der Arbeitsmaschine (10) innerhalb des Reintanks (22) aufnimmt.

10. Kühlvorrichtung nach einem der Ansprüche 1 bis 9, **dadurch gekennzeichnet, dass** die Arbeitsmaschine (10) eine Schleifmaschine, insbesondere eine Fünfachs-Schleifbearbeitungsmaschine ist.

## Claims

1. Cooling device for a working machine (10) for cooling a hot fluid such as a coolant/lubricant, with at least one cooling aggregate (48) being supplied with filtered fluid by means of a pump unit with at least one hydraulic pump (P2) from a filter means (40) consisting of at least one storage tank (38), with a sub-division into a clean tank (22) and a dirty tank (36), whereby the cooling aggregate (48) returns fluid cooled during circulation to the clean tank (22), **characterised in that** the hydraulic pump (P2) of the pump unit pumps only fluid filtered by the filter means (40) from the dirty tank (36) into the clean tank (22), and **in that** a further stand-alone hydraulic pump (P5) pumps the fluid returned to the clean tank (22) into the cooling aggregate (48) for circulation.

2. Cooling device according to Claim 1, **characterised in that** the cooling aggregate (48) is a compressor cooling aggregate with a heat exchanger (50), a compressor means (52), and an evaporator means.

3. Cooling device according to Claim 2, **characterised in that** the evaporation means consists of the heat exchanger (50).

4. Cooling device according to one of the Claims 1 to 3, **characterised in that** the working machine (10) comprises parts to be supplied with the fluid such as drives (12, 14, 16), which are supplied by means of at least one further third hydraulic pump (P4) via a pre-cycle (20) from the relevant clean tank (22), which returns the distributed fluid heated into the clean tank (22) via a return line (28).

5. Cooling device according to one of the Claims 1 to 4, **characterised in that** fluid is transported from the clean tank (22) to a cleaning or flushing means (30, 32) of the working machine (10) by means of at least one further fourth hydraulic pump (P3).

6. Cooling device according to one of the Claims 1 to 5, **characterised in that** fluid exiting from the working machine (10) to atmosphere is collected at a collection station (34) and can be transported to the relevant dirty tank (36) by means of at least one further fifth hydraulic pump (P1).

7. Cooling device according to Claim 5 or 6, **characterised in that** a flow monitor positioned in the pre-cycle (20) controls the relevant fourth hydraulic pump (P3), and in particular switches these off when the pre-cycle (20) is fluid-free.

8. Cooling device according to one of the Claims 1 to 7, **characterised in that** the adjustment of the actual cooling performance of the overall working machine (10) is effected by means of a controller, which switches the cooling aggregate (48) on, e.g. off when an upper or lower limit value, e.g. a pre-determined target temperature is reached.

9. Cooling device according to one of the Claims 4 to 8, **characterised in that** the extraction of fluid for the cooling aggregate (48) is effected into a warm area of the clean tank (22) located near the outlet point of the return line (28) into the clean tank (22), and receives heated fluid from the parts of the working machine (10) to be supplied into the clean tank (22).

10. Cooling device according to one of the Claims 1 to 9, **characterised in that** the working machine (10) is a sander, in particular a five-axle machining sander.

## Revendications

1. Dispositif de refroidissement pour une machine (10) fournissant du travail, pour le refroidissement d'un fluide chauffé, comme un agent réfrigérant lubrifiant, comprenant au moins un groupe (48) de refroidissement, qui reçoit, au moyen d'un dispositif de pompage ayant au moins une pompe (P2) hydraulique, d'un dispositif (4) de filtration du fluide filtré qui provient d'au moins un réservoir (38), ayant une subdivision en une cuve (22) pour du produit propre et en une cuve (36) pour du produit sale, le groupe (48) de refroidissement ramenant dans la cuve (22) pour du produit propre du fluide refroidi en circulation, **caractérisé en ce que** la pompe (P2) hydraulique du dispositif de pompage véhicule exclusivement du fluide, filtré par le dispositif (40) de filtration, de la cuve (36) pour du produit sale à la cuve (22) pour du produit propre et qu'une autre pompe (P5) hydraulique autonome véhicule plus loin pour la circulation vers le groupe (48) de refroidissement le fluide introduit dans la cuve (22) pour le produit propre.

2. Dispositif de refroidissement suivant la revendication 1, **caractérisé en ce que** le groupe (48) de refroidissement est un groupe de refroidissement à compresseur, ayant un échangeur de chaleur (50), un dispositif (52) de compresseur et un dispositif d'évaporateur.

3. Dispositif de refroidissement suivant la revendication 2, **caractérisé en ce que** le dispositif d'évaporateur est formé d'un échangeur de chaleur (50).

4. Dispositif de refroidissement suivant l'une des revendications 1 à 3, **caractérisé en ce que** la machine (10) fournissant du travail a des parties alimentées en le fluide, comme des entraînements (12, 14, 16), qui sont alimentées au moyen d'au moins une autre troisième pompe (P4) hydraulique dans un conduit (20) d'alimentation à partir de la cuve (22) respective pour le produit propre et qui retournent, chauffé par un conduit (28) de retour, le fluide qui y a été réparti à la cuve (22) pour du produit propre.

5. Dispositif de refroidissement suivant l'une des revendications 1 à 4, **caractérisé en ce qu'**au moyen d'au moins une autre quatrième pompe (P3) hydraulique, du fluide peut être véhiculé de la cuve (22) pour du produit propre à un dispositif (30, 32) de nettoyage ou de lavage de la machine (10) fournissant du travail.

6. Dispositif de refroidissement suivant l'une des revendications 1 à 5, **caractérisé en ce que**, sur la machine (10) fournissant du travail, du fluide sortant à l'extérieur est collecté dans un poste (34) de collecte et peut être évacué dans la cuve (36) respective pour du produit sale au moyen d'au moins une autre cinquième pompe (P1) hydraulique.

7. Dispositif de refroidissement suivant la revendication 5 ou 6, **caractérisé en ce qu'**un contrôleur de courant, monté dans le conduit (20) d'alimentation, commande la quatrième pompe (P3) hydraulique et l'arrête, notamment lorsque le conduit (20) d'alimentation est sans fluide.

8. Dispositif de refroidissement suivant l'une des revendications 1 à 7, **caractérisé en ce que** l'adaptation du besoin de puissance de refroidissement instantanée de l'ensemble de la machine (10) fournissant du travail s'effectue au moyen d'un dispositif de commande, qui branche ou débranche le groupe (48) de refroidissement lorsqu'est atteinte une limite supérieure ou une limite inférieure d'une température de consigne pouvant être prescrite.

9. Dispositif de refroidissement suivant l'une des revendications 4 à 8, **caractérisé en ce que** le prélèvement du fluide pour le groupe (48) de refroidissement s'effectue dans une partie chaude de la cuve (22) pour du produit propre, qui se trouve à proximité du point d'embouchure du conduit (28) de retour dans la cuve (22) pour du produit propre et qui reçoit à l'intérieur de la cuve (22) pour du produit propre du fluide chauffé par les parties alimentées de la machine (10) fournissant du travail.

10. Dispositif de refroidissement suivant l'une des revendications 1 à 9, **caractérisé en ce que** la machine (10) fournissant du travail est une machine de rectification, notamment une machine d'usinage par rectification à cinq axes.
